Europäisches Patentamt

European Patent Office

Office européen des brevets

(11) Publication number: **0 125 876**

**A1**

## (12) EUROPEAN PATENT APPLICATION

(21) Application number: **84303119.6**

(22) Date of filing: **09.05.84**

(51) Int. Cl.³: **F 16 D 1/08**

(30) Priority: **13.05.83 US 494506**

(43) Date of publication of application:
**21.11.84 Bulletin 84/47**

(84) Designated Contracting States:
**DE FR GB IT**

(71) Applicant: **PNEUMO CORPORATION**
**4800 Prudential Tower**
**Boston Massachusetts 02199(US)**

(72) Inventor: **Dirkin, William**
**1616 W. Candlewyck**
**Kalamazoo Michigan 49001(US)**

(72) Inventor: **Herder, Michael**
**2500 West E. Avenue**
**Kalamazoo Michigan 49007(US)**

(74) Representative: **Topps, Ronald et al,**
**D. YOUNG & CO 10 Staple Inn**
**London WC1V 7RD(GB)**

(54) Connection for torque transmitting members.

(57) A connection between two members (10, 12) includes a noncircular shaft portion (10) on one member extending through a complementary passage (14) in the other member (12), with resilient tabs or tines (40, 42, 44) on one of the members which form extensions of the cooperating surfaces (16-22). The tines (40, 42, 44) are deformed into tight frictional engagement with the other member (12) thus providing a preload between the driving surfaces that produces zero backlash. When torque is first applied to one of the members, it is transmitted to the other member through the tabs which eliminate free play and backlash between such members. As the applied torque increases, the tabs deform elastically until the cooperating non-circular surfaces on the members engage each other to transmit the larger torques through the mechanical contact between such non-circular surfaces.

FIG. I

## CONNECTION FOR TORQUE TRANSMITTING MEMBERS

The present invention relates generally as indicated to a connection between torque transmitting members, and more particularly to such a connection which transmits torque in either direction without backlash between the members around zero load.

There are many instances in which it is desirable to have mechanical components which are free of backlash. One example is in a servo control mechanism where the mechanical components are to be held at a position of no load. In such a no load position, deviation of the mechanical components in one direction from the desired position requires corrective action in another direction. However, any backlash around the no-load position would make accurate control virtually impossible.

There are several known types of connections for transmitting torque between mechanical components which will transmit torque in either direction. As used in this specification including the appended claims the phrase "in either direction" or the like when referring to torque means torque tending to rotate the components either clockwise or counterclockwise. One example of such components is a torsion rod and a crank arm.

The connection between a torsion rod and a crank arm has been made with axially extending splines on the torsion rod and corresponding splines on the inside of a passage through the torsion arm. Slots and keys have also been used. All of these connections include some backlash between the members. The backlash can be reduced but not completely eliminated by increasingly accurate and expensive machining operations.

Torque transmitting connections have also been designed which are entirely without backlash. In the example above, the splines can be made tapered to fit in a tapered, splined socket. This eliminates backlash, but also eliminates any axial adjustment of the parts relative to one another.

Another method used to eliminate backlash is to cut axially extending slots in either one of the members to separate the splines into separate tines which can be resiliently urged into tight engagement with the other member.  U.S. Patent 4,178,777 shows one such connection in which splines on the male member are biased outward into tight engagement with a splined socket in the other member.  Although this connection eliminates backlash and permits axial adjustments of the members, it is limited in the load it can transmit because all the torque must be transmitted by the tines.

A similar connection is shown in U.S. Patent 485,678 in which one end of a square shaft is split axially into quarters and inserted in a tapered square hole in a crank arm.  A tapered screw is driven into a central passage in the shaft to spread the quarters out into engagement with the sides of the square hole.  Also, a slot is cut through the crank arm from the middle of one side of the square hole, and a bolt extends across the slot to contract the square hole further against the shaft.  A shoulder on the shaft positions the arm axially.

The invention of the present application provides a mechanical connection for transmitting torque between two members in either direction without backlash between the members.  Moreover, the connection according to the present invention allows some axial adjustment of the parts prior to tightening the connection, and the torque transmitted through the connection is limited only by the strength of the components apart from the connection.

According to the invention the two members are preferably provided with cooperating torque transmitting surfaces which may take the form of a non-circular shaft portion of one member and a complementary passage through the other member with surfaces spaced close to the outside surfaces of the shaft portion.  One of the two members preferably includes resilient tabs or tines which form extensions of the cooperating surfaces, and means are provided for elastically deforming the tabs into tight engagement with the other of the members to provide a preloaded surface that produces zero backlash.  In one embodiment the tabs preferably take the form of extensions of the passage through the female member, which are biased inward against the shaft.  In another embodiment the tabs preferably form extensions of the non-circular shaft, and the tabs are preferably biased radially outward against the wall of the passage through the female member. In either case, provision is made for axial adjustment of the members prior to pressing the tabs of one member into tight engagement with the other member.

The connection of the present invention transmits large torques between the two members and eliminates backlash when the direction of the torque changes. When torque is first applied to one of the members, it is transmitted to the other member through the tabs which are preloaded to provide a zero backlash. As the applied torque increases, the tabs deform elastically until the cooperating non-circular surfaces engage each other. Larger torques are then transmitted through the mechanical contact of the cooperating non-circular surfaces on the two members. Whenever the applied torque decreases and eventually reverses direction, the process is reversed. Because of the preloaded engagement of the tabs on one member with the other member there is no backlash between the members as they pass through zero load.

Several embodiments of the invention will now be described, by way of example, with reference to the accompanying drawings, in which:

Figure 1 is a fragmentary perspective view of one form of connection constructed in accordance with the present invention;

Figure 2 is a fragmentary side elevation view of the connection of Figure 1;

Figure 3 is a fragmentary end elevation view of the connection of Figure 2 as seen from the plane of the line 3-3 thereof;

Figure 4 is a fragmentary end elevation view of another embodiment of a connection constructed in accordance with the present invention; and

Figure 5 is a fragmentary longitudinal section through the connection of Figure 4, taken on the plane of the line 5-5 thereof.

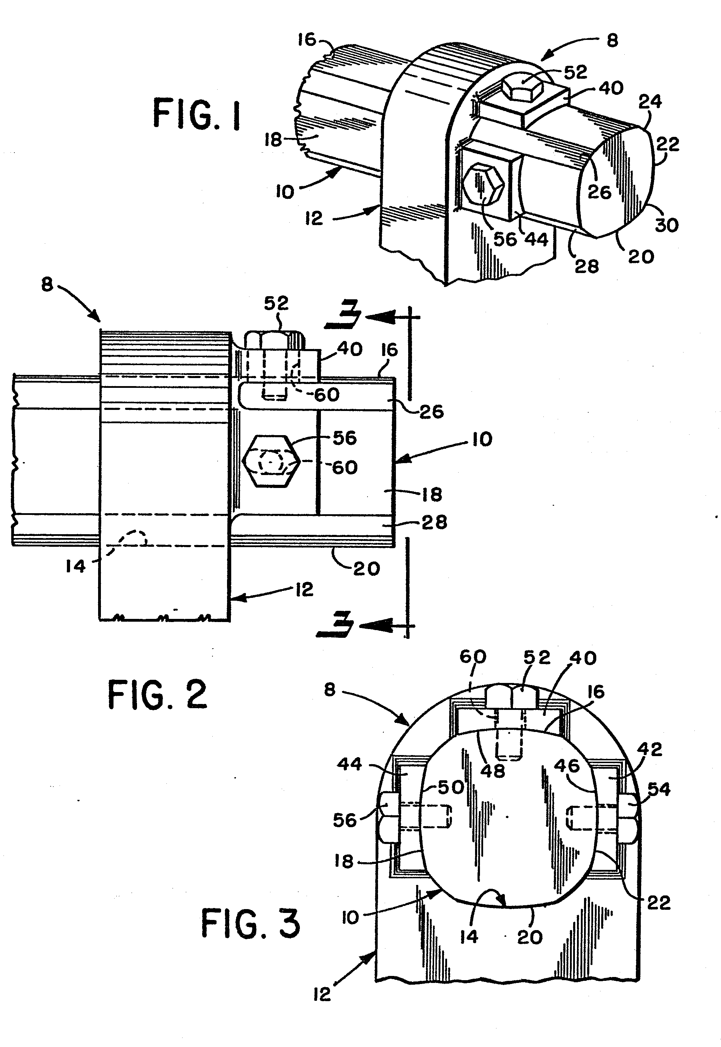

Referring now in detail to the drawings, and initially to Figures 1-3 thereof, there is shown one form of connection 8 between two members 10 and 12 which can transmit torque in either direction without free play and backlash between the members. The first member 10 is a shaft having a non-circular shaft portion. Preferably, such non-circular shaft portion has a generally square cross-section with the major side surfaces 16, 18, 20 and 22

-4-

being slightly rounded. The major side surfaces 16-22 are parallel and each constitutes a segment of a cylinder whose radius may, for example, be approximately the same as the diagonal measure of the shaft 10. The centers of curvature of the major side surfaces 16-22 are parallel and offset from each other. The corners of shaft 10 may be "knocked off" forming narrow axially extending planes or slightly curved surfaces which connect the adjacent major side surfaces.

The second member 12 is provided with a passage 14 which includes surfaces generally complementary to the major side surfaces 16-22 of the first member 10.

The polygonal non-circular cross-section shapes of the member 10 and passage 14 through the member 12 are capable of transmitting large torques. Additionally, these profiles are relatively easy to machine to fairly close tolerances. However, even with close tolerances between the mating surfaces of the members 10 and 12, some backlash therebetween will normally be present.

To eliminate backlash between members 10 and 12, one or more tabs or tines are integrally formed with the member 12. In the connection shown in Figures 1-3, three such tabs 40, 42 and 44 are shown. The tabs 42-44 have internal surfaces 46, 48, and 50 which are complementary to the curved exterior surfaces 16, 18, and 22 of the shaft member 10. The interior surfaces 46-50 of the tabs 40-44 thus form extensions of three of the surfaces of the passage 14 through the member 12. Although three tabs are shown, four, two, or even one could be used. If the member 10 were some non-circular shape other than the rounded square shown, the tabs would be shaped accordingly, and again the number of tabs could vary.

The tabs 40-44 are pressed into tight engagement with the outside surfaces of the shaft 10 by bolts 52, 54, and 56, respectively. The bolts 52-56 pass through holes 60 in the tabs which are elongated in the direction of the axis of the member 10 as shown in Figure 2. Therefore, the longitudinal position of the member 10 can be slightly adjusted with respect to the member 12 prior to tightening the bolts 52-56.

When no load is being applied to either the members 10 or 12 there may be a small clearance between the mating surfaces of the member 10 and the passage 14 through the member 12. With accurate machining, this clearance can be reduced to a minimum, but it will still normally exist. The tabs 40-44, by contrast, provide a preload force against the outside surfaces of the member 10 as aforesaid. Accordingly, when torque is initially applied in one direction to one of the members, e.g. member 10, the torque is immediately transmitted to the second member 12 without any free play or backlash because the load is initially transmitted through the tabs 40-44.

As the applied torque increases the tabs deform elastically until any slight clearance between the outside of the member 10 and the passage 14 through the member 12 is taken up. Thereafter, the load is transmitted from the exterior surfaces 16-22 of the member 10 directly to the complementary surfaces of the passage 14 in the member 12. Thus the load on the tabs does not increase beyond that imposed on them during taking up of any clearance between the members 10 and 12. Whenever the applied torque decreases and then reverses direction, the process reverses itself. That is, the load on the tabs slowly reverses and the tabs deflect in the opposite direction. However, because of the tabs, there is never freedom from contact between the members 10 and 12, whereby a torque initially applied to one of the members always results in a torque being felt immediately by the other member. Accordingly, there is no backlash between such members when such torque is initially applied.

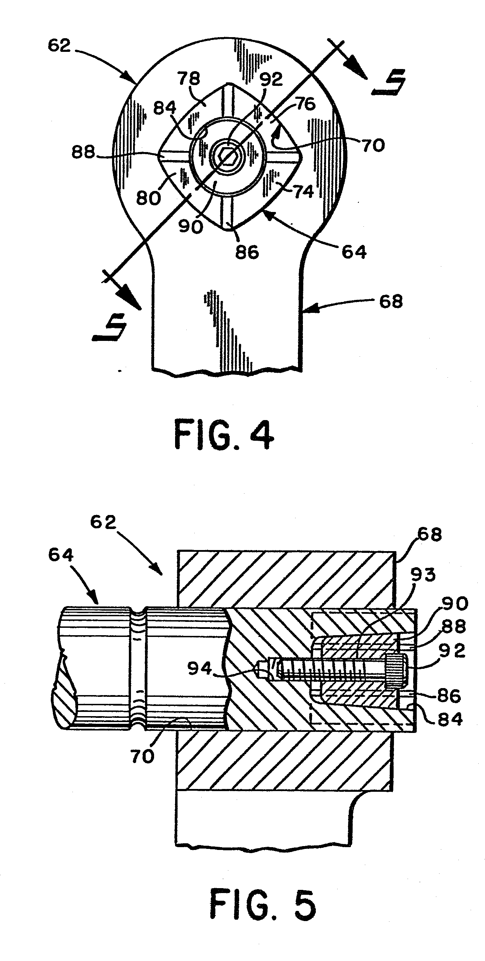

Figures 4 and 5 illustrate another connection 62 in accordance with the present invention which functions substantially the same as the connection 8 of the Figures 1-3 embodiment except that the tines or tabs are provided on the first member 64 rather than on the second member 68. The first member 64 is still provided with the same rounded square profile, and the second member 68 is provided with a through passage 70 having a complementary closely spaced contour as before. Integral with the first member are tabs or tines 74, 76, 78 and 80 which form continuations or extensions of the exterior surfaces of the rounded square portion of the member 64. The tabs may be formed as by providing a conical recess or bore 84 in one end of the member 64 and coaxial therewith. Two diagonal cuts or slits 86 and 88 (Figure 4) are then formed in the end portion of the shaft 64 to form the four separate tabs 74-80.

The depth of the bore 84 and the slits 86 and 88 is related to the axial length of the member 68. Specifically, the solid portion of the member 64 received within the passage 70 must be sufficiently strong to transfer the maximum torques to be applied. Thus the bore 84 and slots 86 and 88 desirably extend only approximately one-third of the length of the axial extent of the female member 68.

A tapered or conical plug 90 fits into the tapered bore 84 and a bolt 92 is used to force the plug axially into the bore. The bolt 92 extends through a central opening 93 in the plug 90 and is threadedly received in a threaded passage 94 in the male member 64, whereby tightening the bolt 92 draws the plug into the bore 84 and expands the tabs 74-80 radially outward into tight engagement with the interior of the female member 68. After assembly of the male member 64 and female member 68, axial adjustment of the parts is possible prior to tightening the bolt 92.

It will be seen that the operation of this second embodiment is quite similar that of the first. In a no-load condition, the tabs 74-80 are pressed tightly against the interior of the passage 70 through the female member 68 and serve to maintain the member 64 axially centered in the passage 70. When a torque is applied to one of the members 64 or 68 such torque is immediately transmitted to the other member through the tabs and there is no backlash in the connection. As the applied torque increases, the tabs deflect and ultimately the torque is transmitted through the rounded square complementary surfaces of the members 64 and 68. When the torque is reduced to zero and then increased in the opposite direction, the tabs deflect back to their original relaxed condition and then in the opposite direction as the applied torque increases. At no time is there free play between the members such that a torque applied to one of the members would result in no torque being felt by the other member and vice versa.

Although the invention has been shown and described with respect to certain preferred embodiments, it is obvious that equivalent alterations and modifications will occur to others skilled in the art upon the reading and understanding of the specification. The present invention includes all such equivalent alterations and modifications and is limited only by the scope of the claims.

CLAIMS:

1.    A connection between first and second members comprising cooperating non-circular surfaces on said first and second members for transmitting relatively large torques in either direction between said members, and means for eliminating backlash between said members when the torque transmitted changes direction, said backlash eliminating means comprising tab means extending from one of said members and forming a continuation of at least one of said non-circular surfaces on said one member, and means for biasing said tab means into tight engagement with at least one of said non-circular surfaces of the other of said members.

2.    The connection of claim 1 wherein there are a plurality of said tab means extending from said one member and forming continuations of a plurality of said non-circular surfaces on said one member, said tab means being biased into tight engagement with a corresponding number of said non-circular surfaces on said other member.

3.    The connection of claim 2 wherein said tab means are resilient, said cooperating non-circular surfaces of said first member are parallel and define an axially extending portion of a shaft, and said complementary surfaces of said other member define an opening for receiving said end portion of said shaft, said tab means extending from said other member parallel to said shaft.

4.    The connection of claim 3 wherein said biasing means includes fasteners extending through said tab means into said shaft, said tab means including enlarged openings for said fasteners whereby said other member is axially adjustable on said one member.

5.    The connection of claim 2 wherein said cooperating non-circular surfaces of said one member define an axially extending portion of a shaft, and said complementary surfaces of said other member define an opening for receiving said end portion of said shaft, said tab means extending from said end portion of said one member.

6.    The connection of claim 5 wherein said biasing means includes means for urging said tab means radially outward into tight engagement with said complementary surfaces of said opening in said other member, a biasing member having a conical surface, and means for drawing said biasing member tightly against said tab means to urge said tab means radially outward.

7. The connection of claim 1 wherein said tab means extend from one of said members and exert a preload force against the other of said members when biased thereagainst, and said cooperating surfaces are free of torque transmitting contact with each other until the torque transmitted exceeds a predetermined minimum to cause said tab means to deform and said cooperating surfaces to move into torque transmitting contact with each other.

8. A connection between a shaft and an arm for transmitting torque in either direction between the shaft and arm without backlash upon changing direction of the torque, said connection comprising an end portion of said shaft having a non-circular cross section, an opening in said arm for receiving said shaft partially defined by at least one tine extending axially of said shaft and having a surface complementary to said end portion of said shaft, and fastener means extending through said tine and into said end portion of said shaft for securing said tine in tight abutting engagement with said end portion of said shaft.

9. The connection of claim 8 wherein said end portion of said shaft includes a plurality of cylindrical segments the axes of which are parallel and offset from each other, and means are provided for adjusting the axial position of said shaft with respect to said arm prior to securing said arm and shaft together.

10. The connection of claim 8 wherein said opening in said arm includes non-circular surfaces which are complementary and closely spaced to the surfaces of said end portion of said shaft, and there are a plurality of said tines extending from said arm and forming continuations of said non-circular surfaces on said arm, and means for biasing said tines into tight engagement with the non-circular surfaces of said end portion of said shaft.

FIG. 1

FIG. 2

FIG. 3

**FIG. 4**

**FIG. 5**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-1 943 790 (FIAT SOCIETA)  * Whole document * | 1-3,7, 8,10 | F 16 D 1/08 |
| Y | | 5,6 | |
| X | FR-A-2 025 849 (BURROUGHS CORP.)  * Pages 5-8; figures 2-4 * | 1-3,7, 10 | |
| D,Y | US-A-4 178 777 (YING)  * Columns 7-8; figures 3,4 * | 5,6 | |
| A | AU-A- 516 939 (UNITED PACKAGES) | | |
| A | DE-A-2 652 157 (WINCKELHAUS) | | |
| A | GB-A-1 217 393 (ROOTES MOTORS) | | |

TECHNICAL FIELDS SEARCHED (Int. Cl. ³)

F 16 D 1/00
F 16 B

The present search report has been drawn up for all claims

| Place of search THE HAGUE | Date of completion of the search 16-07-1984 | Examiner BALDWIN D.R. |
|---|---|---|